# EUROPÄISCHE PATENTANMELDUNG

(11) **EP 1 038 804 A1**
(43) Veröffentlichungstag der Anmeldung: **27.09.2000**
(21) Anmeldenummer: 00105954.2
(22) Anmeldetag: 23.03.2000
(51) Int. Cl.: B65G 1/137, B65G 1/127

(54) **Anzeigevorrichtung an einem Regal, insbesondere einem Hochregal**

(30) Priorität: 23.03.1999 DE 29905396 U
(71) Anmelder: Bellheimer Metallwerk GmbH, 76752 Bellheim (DE)
(72) Erfinder: Siegler, Adrian, 76756 Bellheim (DE)
(74) Vertreter: Fiener, Josef

(57) **Zusammenfassung**

Zur sicheren Bedienerführung und Vermeidung von Fehlbedienungen bei einem Regal (1), insbesondere einem Hochregal in Form eines mechanischen Schrankes mit einer Vielzahl von Lagergutträgern (3), die von einem Antrieb selektiv zu einer Ein-/Auslageröffnung (2) bewegbar sind, wobei auf jeweils einem Lagergutträger (3) mehrere Lagergutzeilen (4) angeordnet sind, wird eine Anzeigevorrichtung (6) vorgeschlagen, bei der an wenigstens einer Seitenwand (5) der Ein-/Auslageröffnung (2) entsprechend der Teilung der Lagergutzeilen (4) aufrecht stehende Lichtleisten (7) angeordnet sind.

## Beschreibung

Die Erfindung betrifft eine Anzeigevorrichtung an einem Regal, insbesondere einem Hochregal in Form eines mechanischen Schrankes mit einer Vielzahl von Lagergutträgern, die von einem Antrieb selektiv zu einer Ein-/Auslageröffnung bewegbar sind, wobei auf jeweils einem Lagergutträger mehrere Lagergutzeilen angeordnet sind.

Aus der WO 97/37564 ist eine derartige Lagervorrichtung bekannt, wobei eine Sicherheitseinrichtung an der Ein-/Auslageröffnung beschrieben wird. Hierin ist der grundsätzliche Aufbau derartiger Lagervorrichtungen in Form eines mechanischen Schrankes mit einer Vielzahl von Lagergutträgern beschrieben. Auf den Lagergutträgern ist dabei das Lagergut, in Ein-/Auslagerrichtung gesehen, hintereinander angeordnet. Im allgemeinen sind dabei auf dem Lagergutträger zur Halterung mehrere Lagergutzeilen angeordnet, deren Teilung je nach Lagergut einstellbar ist. Bei Kleinteilen wie beispielsweise Schrauben oder Arzneimitteln sind i. a. bei einer Tiefe (= Erstreckung des Lagergutträgers in der Ein-/Auslagerrichtung) von ca. 80 cm in etwa fünf derartige Lagergutzeilen vorgesehen, so daß mehrere Kartons oder Kleinteilmagazine mit einer Tiefe von ca. 15 cm in die einzelnen Lagergutzeilen eingestellt werden können. Die einzelnen Kartons oder Kleinteilmagazine sind somit sicher an den die Lagergutzeilen bildenden Trennwänden abgestützt, so daß auch bei raschen Bewegungen, insbesondere Beschleunigungen bzw. Verzögerungen in Horizontalrichtung bei der Ein-/Auslagerung in den einzelnen Säulen des Hochregals das Lagergut sicher gehalten ist.

Bei noch kleinerem Lagergut können somit auf dem Lagergutträger auch zehn oder mehr derartige Lagergutzeilen hintereinander angeordnet sein. Das Lagerpersonal, das beispielsweise die Kommissionierung vornimmt, muß somit zur Entnahme des richtigen Lagergutes in die jeweilige Lagergutzeile greifen und eine Auswahl treffen. Diese manuelle Entnahme aus den einzelnen Lagergutzeilen ist nicht nur zeitaufwendig, sondern auch fehlerbehaftet, wenn beispielsweise das Lagerpersonal trotz der Anweisung, beispielsweise einen Karton aus der siebten Reihe zu entnehmen, irrtümlich in die sechste oder achte Reihe greift. Diese Fehlergefahr wird noch dadurch verschärft, daß auf den Lagergutträgern unterschiedliche Kartons oder Kleinteilmagazine gelagert sind, so daß beispielsweise niedrige Kleinteile nach einer relativ hohen Lagergutzeile übersehen werden und somit ein Fehlgriff erfolgen kann. Dies gilt insbesondere für die an der Ein-/Auslageröffnung weiter hinten liegenden Lagergutzeilen.

Demzufolge liegt der Erfindung die Aufgabe zugrunde, eine Anzeigevorrichtung zu schaffen, die die vorstehenden Nachteile vermeidet und Fehlbedienungen durch eine sichere Bedienerführung weitgehend verhindert.

Diese Aufgabe wird gelöst durch eine Anzeigevorrichtung mit den Merkmalen des Anspruches 1.

Durch die vorgeschlagenen aufrecht stehenden Lichtleisten an wenigstens einer Seitenwand der Ein-/Auslageröffnung, wobei die Lichtleisten entsprechend der Teilung der Lagergutzeilen angeordnet sind, wird eine sichere Information und Bedienerführung des Bedienpersonals erreicht. Durch das Aufleuchten der jeweiligen Lichtleiste bei der Bereitstellung der angeforderten Ware zur manuellen Entnahme erhält das Bedienpersonal die eindeutige Information, das Lagergut aus der "angeleuchteten" Lagergutzeile zu entnehmen. Damit werden Fehlgriffe, auch durch unqualifiziertes Personal, weitgehend ausgeschlossen. Zudem kann hierdurch der Entnahmevorgang wesentlich beschleunigt werden, da das Suchen der jeweiligen Lagergutzeile nicht mehr durch Abzählen o. dgl. erfolgen braucht, sondern maschinenseitig in eindeutiger Weise angezeigt wird.

Durch die aufrecht stehenden Lichtleisten können auch bei hohen Lagergütern die einzelnen Lagergutzeilen eindeutig identifiziert werden, da die Lichtleisten sich so weit in der Höhe der Ein-/Auslageröffnung erstrecken, daß diese durch das höchste zu erwartende Lagergut nicht abgedeckt werden. Insbesondere ist somit auch bei stark unterschiedlich hohen Lagergütern in einzelnen Lagergutzeilen eine eindeutige optische Zuordnung und Information für den Bediener möglich, da auch unterschiedlich hohes Lagergut die Anzeigevorrichtung nicht abdeckt oder auf dahinter liegende kleinere Lagergüter nicht versperrt. Auch werden hierdurch Spiegelungen am Lagergut, die zu einer Fehlinformation dieser "Tiefenanzeige" führen können, vermieden.

In bevorzugter Ausführungsform sind die Lichtleisten bündig mit der Seitenwand der Ein-/Auslageröffnung angeordnet, wobei in besonders einfacher Weise eine einzige Punkt-Lichtquelle vorgesehen ist, die einen lichtleitenden Kunststoffstab, insbesondere aus PMMA, beleuchtet. Hierdurch wird eine Lichtverteilung über die gesamte Höhe der Lichtleiste erreicht.

Es sei darauf hingewiesen, daß die Anordnung der aufrecht stehenden Lichtleisten entsprechend der Teilung der Lagergutzeilen erfolgt. Wenn somit beispielsweise die Teilung der Lagergutträger verändert wird, wird in entsprechender Weise die Teilung der Lichtleisten verändert. Wenn z. B. eine bestimmte Rasterung auf den Lagergutträgern vorgesehen ist, beispielsweise eine Trennwand für die Einlagerung größerer Lagergüter entnommen wird, kann dann die entsprechende Lichtleiste abgeschaltet werden oder zur noch deutlicheren Information beide Lichtleisten für die jeweilige Lagergutzeile aktiviert werden. Um die Veränderung der Teilung zu ermöglichen, kann hierzu die Seitenwand auch aus einem transparenten Material bestehen, so daß die dahinter angeordneten Lichtleisten in einfacher Weise entlang der Seitenwand so verschoben werden können, daß sie mit der Teilung der Lagergutzeilen korrespondieren. Obwohl hierbei die Anordnung nur an einer Seitenwand der Ein-/Auslageröffnung beschrieben ist, ist die Anzeigevorrichtung bevorzugt an beiden Seitenwänden vorgesehen, um hier auch eine gleichmäßigere Ausleuchtung der Ein-/Auslageröffnung zu ermöglichen bzw. die Orientierung für Rechts- oder Linkshänder bei dem Bedienpersonal zu erleichtern.

Es sei darauf hingewiesen, daß die aufrecht stehenden Lichtleisten, insbesondere bei der Anordnung mit einer Vielzahl von Lichtquellen entlang der aufrecht stehenden Lichtleisten, auch als Höhensensor Verwendung finden können, wie dies in dem eingangs genannten Stand der Technik beschrieben ist, wobei der dortige Höhensensor nur zur Erfassung der Höhe des einzulagernden Lagergutträgers verwendet wird, um diesem dann einen entsprechenden Platz in der Lagervorrichtung zuzuweisen. Demgegenüber dient die hier vorliegende Anzeigevorrichtung insbesondere der Information des Entnahmepersonals und der Reduzierung der Fehlgriffe und Entnahmezeit.

Nachfolgend wird ein Ausführungsbeispiel der Anzeigevorrichtung an einem Regal anhand der Zeichnung näher erläutert und beschrieben. Hierbei zeigen:
- Fig. 1: ein Regal in Perspektivdarstellung in Form eines mechanischen Schrankes (sog. Lift);
- Fig. 2: eine vergrößerte Darstellung der Ein-/Auslageröffnung gemäß Fig. 1;
- Fig. 3: eine weitere Vergrößerung der Seitenwand der Ein-/Auslageröffnung; und
- Fig. 4: eine abgewandelte Ausführungsform der Anzeigevorrichtung gemäß Fig. 3.

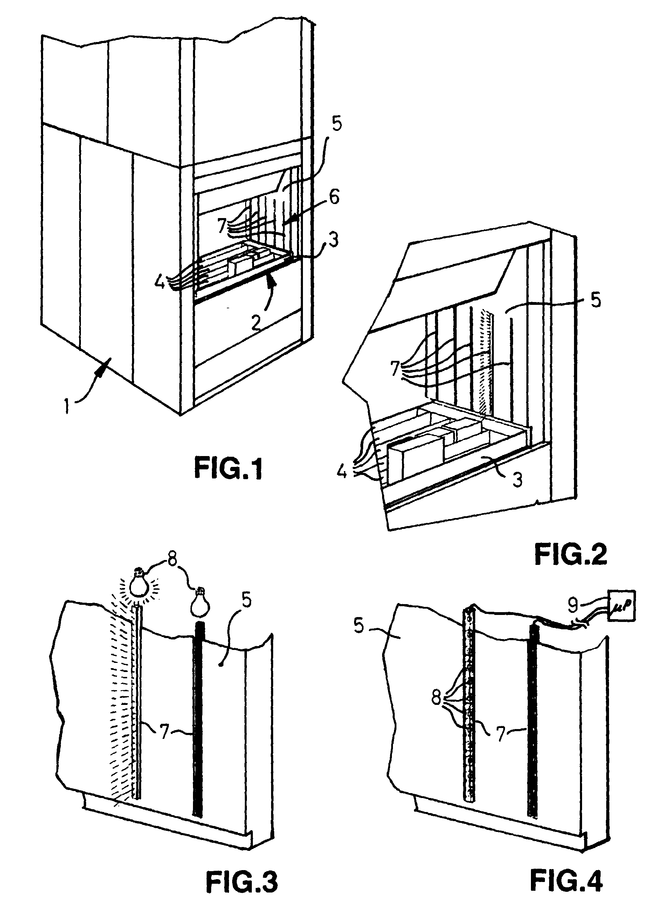

In Fig. 1 ist ein Regal 1 in Form eines mechanischen Schrankes (sog. Lift) dargestellt, der im Grundaufbau der Lagervorrichtung gemäß WO 97/37564 entspricht. Hierbei wird eine Vielzahl von Lagergutträgern 3 von einem nicht näher dargestellten Antrieb selektiv zu einer Ein-/Auslageröffnung 2 bewegt, so daß das Personal auf das jeweilige Lagergut zugreifen kann, das in mehreren Lagergutzeilen 4 angeordnet ist. Es versteht sich von selbst, daß bei der Einlagerung die jeweils umgekehrte Reihenfolge gilt.

An einer Seitenwand 5 der Ein-/Auslageröffnung 2 ist hier eine Anzeigevorrichtung 6 in Form von mehreren Lichtleisten 7 vorgesehen. Diese Lichtleisten 7 sind entlang wenigstens einer Seitenwand 5 der Ein-/Auslageröffnung 2 entsprechend der Teilung der Lagergutzeilen 4 angeordnet, nämlich, wie dargestellt, für fünf Lagergutzeilen 4 sind auch fünf Lichtleisten 7 aufrecht stehend an der Seitenwand 5 angeordnet (vgl. auch Fig. 2).

Wie in Fig. 2 dargestellt, leuchtet für die Entnahme aus der hier, von vorne gesehen, zweiten Lagergutzeile 4 die zweite Lichtleiste 7 auf. Das Aufleuchten der gewünschten Lichtleiste 7 wird dabei entsprechend der Anforderung des gewünschten Lagergutes von einem Steuerungsteil 9, i. a. einer Mikroprozessorsteuerung mit entsprechenden Speichern für die jeweilige Lagergutposition gesteuert. Sobald somit das angeforderte Lagergut auf dem jeweiligen Lagergutträger 3 an der Ein-/Auslageröffnung 2 eintrifft und das angeforderte Lagergut in der Position der hier zweiten Lagergutzeile 4 gespeichert ist, leuchtet die hier zweite Lichtleiste 7 auf. Das Aktivieren der entsprechenden Lichtleiste 7 erfolgt hierbei durch eine Lichtquelle 8 unter Ansteuerung durch das Steuerungsteil 9, wobei bevorzugt eine einzige Punkt-Lichtquelle 8 pro Lichtleiste 7 vorgesehen ist. Die Anordnung einer einzigen Punkt-Lichtquelle 8, beispielsweise mittig an der Seite der Lichtleiste 7 oder an der unteren oder oberen Endfläche, wie hier dargestellt, ermöglicht eine besonders einfache Bauweise, da die Lichtverteilung über den lichtleitenden Kunststoff, insbesondere PMMA, erfolgt. Hierdurch ist die Anordnung der einzelnen Lichtleisten 7 mit der zugeordneten Lichtquelle 8 besonders einfach, beispielsweise wenn die Teilung der Lagergutzeilen 4 verändert wird. Diese Anordnung mit einer einzigen Punkt-Lichtquelle 8 an der oberen Endfläche der aufrecht stehenden Lichtleiste 7 ist in Fig. 3 dargestellt.

In Fig. 4 ist eine abgewandelte Ausführungsform dargestellt, wobei an der aufrecht stehenden Lichtleiste 7 eine Vielzahl von Lichtquellen 8 angeordnet ist. Diese Anordnung in der Lichtleiste 7 selbst oder an deren Rückseite ermöglicht eine höhere Helligkeit entlang der gesamten Leistenlänge. Zudem könnte diese Anordnung mit einer Vielzahl von Lichtquellen 8 entlang der Lichtleiste 7 dazu benutzt werden, bei der Einlagerbewegung einen Höhensensor zu realisieren, da die Anzeigevorrichtung 6 vorwiegend bei der Auslagerung benötigt wird. Andererseits könnte gerade die am tiefsten angeordnete Lichtleiste 7 auch bei der Einlagerung zunächst zur Anzeige der tiefsten Lagergutzeile 4 dienen und dann, kurz bevor der Antrieb in Bewegung gesetzt wird, zur Abtastung der jeweiligen Höhe aller Lagergutzeilen 4 verwendet werden. Hierdurch kann dann die jeweilige Lagerplatzzuordnung erfolgen bzw. Überhöhen angezeigt bzw. in diesem Falle ein Fehlersignal abgegeben werden.

## Patentansprüche

1. Anzeigevorrichtung an einem Regal (1), insbesondere einem Hochregal in Form eines mechanischen Schrankes mit einer Vielzahl von Lagergutträgern (3), die von einem Antrieb selektiv zu einer Ein-/Auslageröffnung (2) bewegbar sind, wobei auf jeweils einem Lagergutträger (3) mehrere Lagergutzeilen (4) angeordnet sind,
dadurch gekennzeichnet, daß
an wenigstens einer Seitenwand (5) der Ein-/Auslageröffnung (2) entsprechend der Teilung der Lagergutzeilen (4) aufrecht stehende Lichtleisten (7) angeordnet sind.

2. Anzeigevorrichtung nach Anspruch 1, dadurch gekennzeichnet, daß die Lichtleisten (7) bündig mit der Seitenwand (5) der Ein-/Auslageröffnung (2) sind.

3. Anzeigevorrichtung nach Anspruch 1 oder 2, dadurch gekennzeichnet, daß sich die Lichtleisten (7) über zumindest nahezu die gesamte Höhe der Seitenwand (5) erstrecken.

4. Anzeigevorrichtung nach einem der Ansprüche 1 bis 3, dadurch gekennzeichnet, daß die Lichtleisten (7) durch je eine Kunststoffleiste gebildet sind, die durch wenigstens eine Lichtquelle (8) selektiv beleuchtbar ist.

5. Anzeigevorrichtung nach Anspruch 4, dadurch gekennzeichnet, daß eine einzige Punkt-Lichtquelle (8), insbesondere eine LED pro Lichtleiste (7) vorgesehen ist.

6. Anzeigevorrichtung nach Anspruch 4 oder 5, dadurch gekennzeichnet, daß die Lichtquelle (8) etwa mittig an der Rückseite der Lichtleiste (7) angeordnet ist.

7. Anzeigevorrichtung nach Anspruch 4 oder 5, dadurch gekennzeichnet, daß die Lichtquelle (8) an der oberen oder unteren Endfläche der Lichtleiste (7) angeordnet ist, die aus lichtleitendem Kunststoff, insbesondere PMMA, besteht.

8. Anzeigevorrichtung nach einem der Ansprüche 1 bis 7, dadurch gekennzeichnet, daß die Lichtleisten (7) mit einem Steuerungsteil (9) verbunden sind, das bei der Auslagerbewegung die Anwahl des jeweiligen Lagergutträgers (3) mit Zuordnung der jeweiligen Lagergutzeile (4) steuert.

9. Anzeigevorrichtung nach einem der Ansprüche 1 bis 4, dadurch gekennzeichnet, daß wenigstens eine der Lichtleisten (7) durch eine Vielzahl von Lichtquellen (8) gebildet ist, die in gleichmäßigem Abstand in Vertikalrichtung angeordnet sind und bei der Einlagerbewegung die Höhe des Lagergutes erfassen.
